## Europäisches Patentamt
## European Patent Office
## Office européen des brevets

(11) Publication number: **0 032 774**
**B1**

(12) **EUROPEAN PATENT SPECIFICATION**

(45) Date of publication of patent specification: **21.10.87**

(21) Application number: **81200060.2**

(22) Date of filing: **16.01.81**

(51) Int. Cl.⁴: **G 01 N 21/55**

(54) **Optical reflection meter.**

(30) Priority: **18.01.80 NL 8000349**

(43) Date of publication of application:
**29.07.81 Bulletin 81/30**

(45) Publication of the grant of the patent:
**21.10.87 Bulletin 87/43**

(84) Designated Contracting States:
**BE CH DE FR GB IT LI LU NL SE**

(56) References cited:
**DE-A-2 211 702**
**US-A-3 786 266**

**PLASTICS ENGINEERING, vol. 34, no. 12, December 1978, pages 35-39, Greenwich, Con. (USA); F. BILLMEYER et al.: "Color measurement in the computer age"**

**APPLED OPTICS, vol. 12, no. 4, April 1973, pages 837-840, New York (USA); A. LOTT et al.: "Spectral reflectivity measurements using fiber optics"**

The file contains technical information submitted after the application was filed and not included in this specification

(73) Proprietor: **Rijksuniversiteit te Groningen**
**Broerstraat 5**
**NL-9712 CP Groningen (NL)**

(72) Inventor: **Ten Bosch, Jacobus Johannes**
**Valkenierslaan 5**
**NL-9301 KM Roden (NL)**
Inventor: **Borsboom, Petrus Cornelis Franciscus**
**Kerkstraat 26**
**NL-9991 BL Middelstum (NL)**

(74) Representative: **Urbanus, Henricus Maria, Ir.**
**et al**
**c/o Vereenigde Octrooibureaux Nieuwe Parklaan 107**
**NL-2587 BP 's-Gravenhage (NL)**

(56) References cited:
**IBM TECHNICAL DISCLOSURE BULLETIN, vol. 19, no. 6, November 1976, pages 2174-2175, New York (USA); L. JACOBOWITZ et al.: "Determining reflectometer head correction factors"**

**IBM TECHNICAL DISCLOSURE BULLETIN, vol. 18, no. 9, February 1976, pages 2978-2979, New York (USA); L.A. HORCHOS et al.: "Color analyzer head for wet textiles"**

## Description

This invention relates to an optical reflection meter, suitable for reflectivity measurement on a translucent material, comprising a source of light (4), a light detection means (15, 16) and a probe head (7) comprising at least one optical illumination fibre (1; 2) connecting the light source and the probe head for illuminating the surface (25) to be measured, and an optical fibre guide connecting the probe head (7) and the light detection means (15, 16) for receiving the reflected light and conducting the same to the light detection means.

Such an apparatus is described in an article by L. A. Lott and D. L. Cash in Applied Optics 4 (1973) 837—840, which apparatus is used for spectral reflectivity measurements on surfaces having specular and diffuse reflectivity characteristics, the prior reflectivity meter being suitable for use on large objects, objects having non-planar surfaces, or surfaces of toxic or radioactive materials which must be stored in a protective case. The reflection meter comprises a plurality of optical fibres combined into a main bundle, one end of which is connected to a probe head, which is placed on the surface to be measured, and in the direction of the other end thereof is bifurcated into two branches each comprising a plurality of fibres.

One of the two branches is optically connected via a mirror to a monochromator section of a spechtrophotometer from which it receives the light with which the surface to be measured is illuminated, and the other branch is optically connected via a mirror to a measuring section, and thus conducts the reflected light collected in the probe head to the measuring section. The optical fibres of each of the branches are randomly distributed in the main bundle, so that half of the reflected light is conducted to the measuring section.

The main bundle is fixed in the probe head, the latter being made of Teflon (a registered trademark for polytetrafluoroethylene) in such a manner that the geometry for the illumination of the surface to be measured and collection of the returning, reflected light is 0° and 0°, respectively (both parallel to the normal). The distance of the plane of the fibre ends in the probe head from the surface to be measured is adjustable.

F. W. Billmeijer and D. C. Rich in an article in Plastics Engineering, of December 1978, pages 35—39, give a survey of colour measuring instruments available to the art. In a separate paragraph, the authors enter into the optical measurement of translucent materials, with regard to which they state that an accurate measurement of such a material is extremely difficult and in fact a problem still unsolved.

DE—A—2211702 discloses an optical reflection meter using a probe head comprising a bundle of optical fibres arranged to effect an illumination of the surface of the sample with an angle of incidence of 45° and a bundle of optical fibres arranged to effect reception of the reflected light with an angle of reflection of 0°.

It is an object of the present invention to provide an optical reflectivity meter which permits accurate and reproducible measurements of a translucent material, from very small surfaces, which may or not be confined in a small space, to large surfaces, and, within a wide range, independently of the curvature of the surface.

According to the invention, there is provided an optical reflection meter of the kind specified above, which is characterized in that said optical fibre guide comprises a single optical measuring fibre (3) and in that the probe head is arranged, in use, to effect illumination of the surface (25) of the sample to be measured and reception of the reflected light with angles of incidence and reflection of 45° and 0°, respectively, and in that the probe head is arranged, in use, to effect that once specularly reflected light cannot enter the measuring fibre (3), that the surface area to be measured, is of the order of the depth of light penetration into the material to be measured, or less, and that the surface area illuminated by the optical illumination fibre (1, 2), is of at least substantially the same size as the surface area to be measured.

By the term "reflection" or term derived from it or combinations thereof is understood the phenomenon as defined by the Commission Internationale de l'Eclairage (C.I.E.), published in Publication C.I.E. No. 38 (TC-2.3) 1977, pages 77—78, namely, that reflection is the return of radiation through a medium without a change in wavelength, it being noted that the reflected radiation may be regular, diffuse or mixed, while, according to another distinction, when the radiation flux is caused to fall on the surface of a medium, the reflection which occurs may be partly reflected by the surface (surface reflection), and for another part may be reflected from the interior of the medium (volume reflection). Regular or specular reflection means reflection without diffusion, in accordance with the laws of optical reflection as in a mirror.

When light is caused to fall on the surface of translucent material the following components may contribute to the reflected light:

1. Surface reflection, which may be composed of:
   a. specular reflection and
   b. diffuse reflection, caused by surface roughness;
2. Volume reflection, which may be composed of:
   a. Light which has penetrated into the translucent material and again reaches the surface by (back)scattering, this process being defined by the linear scattering coefficient; and
   b. if the layer of material is sufficiently thin, light from specular and/or diffuse reflection at the rear surface.

It has been found that in optical-reflectivity measurements on an article of translucent material, the dimensions of the illuminated and measured areas of the surface in relation to the depth of penetration of the light into the translucent material are of paramount significance in the sense that, if the illuminated area and the measured area are not large relative to the depth of penetration of the light, the results of the measurement (the measured flux of reflected light) are dependent on the area size.

This dependence on the area size is best seen when the illuminated area and the measured area, are of approximately the same size, and has been found to give reproducible results when the area size is selected to be of the order of the depth of penetration of the light. In this case it is found that with fixed areas of illumination and measurement the flux of reflected light observed is dependent on the depth of penetration of the light, and hence on scattering or the coefficient of scattering. This provides the possibility, in cases in which the only variable is the concentration of the particles in the translucent material that cause the scattering, to measure this concentration. The optical reflection meter could in this case be called a scattering monitor.

When, during measurement, conditions have been selected so that the depth of penetration is short relative to the dimensions of said areas, it turns out that the opacity of the translucent material has no effect on the reflected light observed. In that case the device can be called a reflection meter.

By using optic fibres in the optical reflection meter according to the invention, a flexible probe head arrangement is combined with the possibility of realizing—in a simple manner, by proper selection of fibre diameters—very small illumination and measurement areas in the order of a few tenths of a millimeter. The possibility provided by the present invention, therefore, leads to the realization of very small area dimensions and hence miniaturization of the probe head, and, together with the flexible probe head connection, to wider applicability of the meter in that even places which are accessible and can be reached with difficulty only, can be approached and measured.

It can be deduced from the above observations with regard to the dependency of the illuminated and measured areas in relation to depth of light penetration that the optical reflection meter is more suitable for use as a scattering monitor as the areas of illumination and measurement are smaller. The reason is that when the apparatus according to the invention is used with different materials of various opacities, the adjustment of the probe head can longer satisfy the above condition that the size of the illuminated and measured areas must not be much larger than the depth of penetration.

Owing to the selected geometry for illumination of the surface to be measured and reception of the reflected light of 45° and 0°, respectively, it is possible, by providing a second optic illumination fibre in the probe head symmetrically relatively to the measuring fibre, to produce a measuring arrangement, which, within certain limits, is independent of the flatness of the surface being measured, as will be described more fully hereinafter.

The invention will now be described in greater detail with reference to the accompanying drawings, in which

Fig. 1 is a diagrammatic illustration of an optical reflection meter according to the present invention;

Fig. 2 is a diagrammatic front-elevational view of the probe head, comprising two optical illumination fibres and a measuring fibre;

Fig. 3 shows the probe head of Fig. 2 inside-elevational view;

Fig. 4 shows the probe head of Fig. 2 in bottom view;

Fig. 5 is a graph showing the relationship between the flux of the reflected light and the adjustment of the angle between the axis of the probe head and the normal to the sample;

Fig. 6 is a graph showing the relationship between the distance between the probe head and the surface being measured and the relative portion of specular reflected light; and

Fig. 7 is a graph showing the effect of the linear scattering coefficient on the signal, measured on different papers in layers of different thicknesses and with different backgrounds.

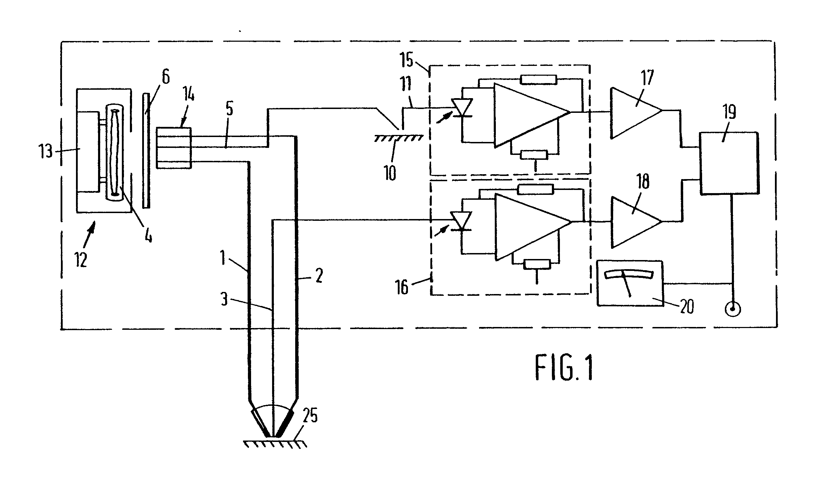

In the apparatus according to the invention (Fig. 1), light is conducted solely by means of quartz fibres; lenses and mirrors are not used. Shown at 1 and 2 are illuminating fibres serving for illumination of the preparation to be examined, and at 3 a measuring fibre.

Illumination fibres 1, 2 are fixed at their ends, together with an optic fibre 5 in an illuminating head 14. Illuminating head 14 is in juxtaposition to an illuminating element 12, which comprises an elongated flashlight 4 connected to a source of high voltage 13. Flashlight 4 illuminates the array of the ends of fibres 1, 2, 5, which have been ground to form a flat surface. These accordingly all receive the same flux; fine adjustment of this equality is possible by tilting the array of fibre ends in the plane containing the source of light and the array of fibre ends. The central fibre 5 is used for the reference beam, to which we will revert hereinafter. The distance between light source 4 and the array of fibre ends has been selected so that the width of the source just fills up the angle of acceptance of the fibres. Spectral selection is effected by means of a disc-shaped interference filter wedge 6, the axis of which is co-planar with the light source and the array of fibre ends. For all fibres the same wavelength is selected without the use of lenses or mirrors or other aids. The disc is placed in close proximity to the array of fibre ends, and the spectral width of the system is thus exclusively determined by the fibre diameter.

Illumination of the sample 25 and collection of the reflected light, without the specular-reflected light, are effected by means of a probe head 7, into which the fibre ends have been cast-in (Fig.

2—4). Illumination and observation through illumination fibres (1, 2 and measuring fibre 3, respectively, are effected at respective angles of 45° and 0°.

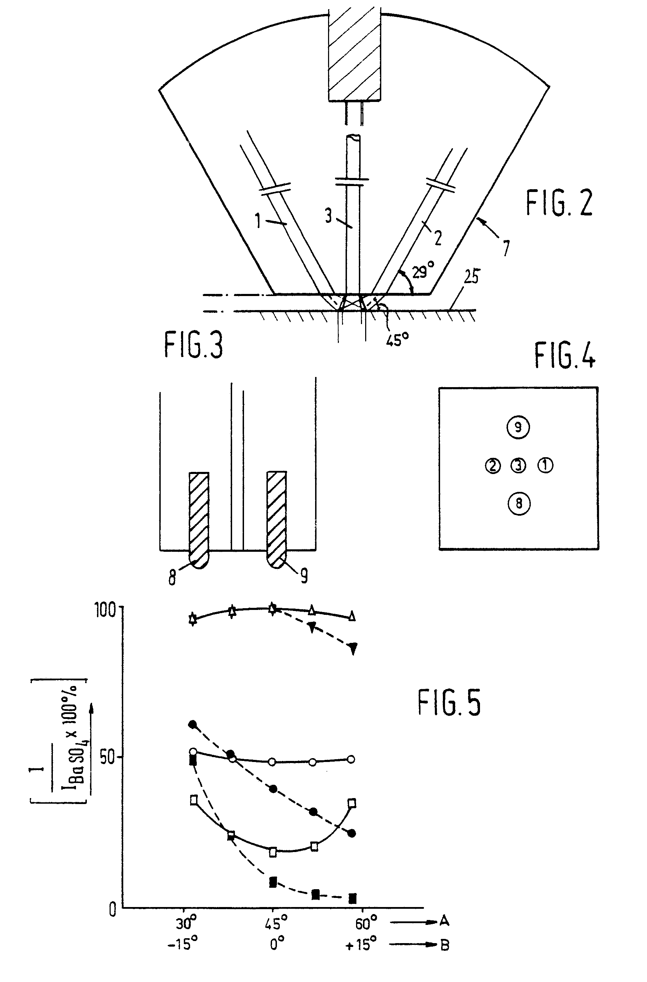

Illumination takes place from two sides, whereby it is achieved that the adjustment of the angle between the axis of the probe head and the normal to the sample is not very critical. This is apparent from Fig. 5, which is a graph showing the relationship between the reflection received from a plurality of samples, plotted along the Y-axis, and expressed in the percentage of the light reflected by a $BaSO_4$ pill (international standard for 100% surface diffuse reflection), and the illumination angle A and the measuring angle B (0° corresponds to the normal), both plotted along the X-axis. The data points marked with a △ in Fig. 5 relate to a preparation in the form of the $BaSO_4$ pill. Furthermore ◯ relates to demineralized dental enamel and □ to healthy dental enamel, all of the data points referred to relating to bilateral illumination of sample 25 through optical illumination fibres 1, 2. The data points marked with the corresponding closed signs, ▲, ●, ■ relate to analogous measurements, with the understanding that the sample was illuminated through one fibre only.

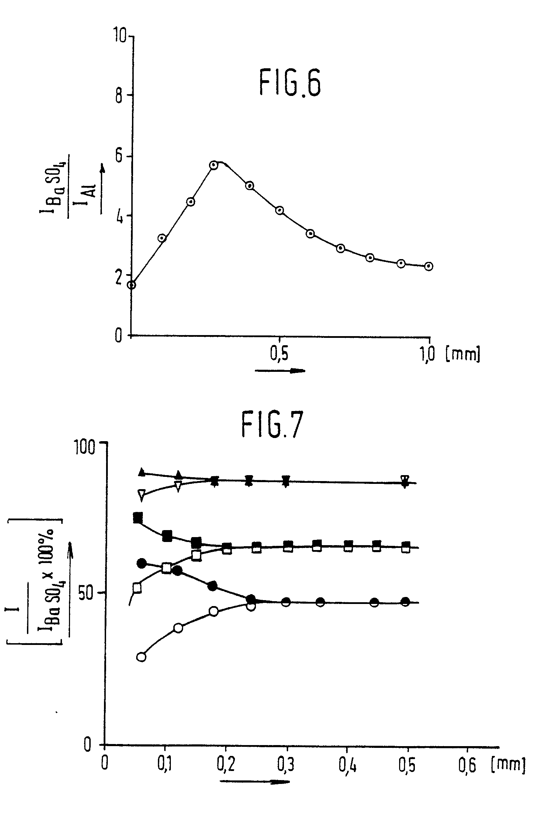

The size of the illuminated and measured areas are as equal as can possibly be achieved with a flat probe head end. The distance between the surface of the probe head and the surface of the sample in combination with the distances between the fibre ends play an important role in connection with the equality referred to: in the geometry used, light specular reflected once at the sample surface is not accepted by the measuring fibre 3. Light specular reflected three times (sample—probe head surface—sample) is accepted. In the case of non-metallic reflecting surfaces, however, this contribution is slight: with an index of reflection $n_{sample}=1.57$, the thrice reflected flux is less than 0.5% of the flux returned by a sample by way of diffuse white reflection. Control experiments have shown, however, that with the fibre diameter used a selected probe head-to-sample distance of 0.3±0.02 mm is the correct one, in which connection reference is made to Fig. 6, the ratio of the intensities of the reflected light, measured relative to a $BaSO_4$ pill, to that of an aluminium mirror is plotted along the Y-axis, and the distance in millimeters of the probe head from the surface being measured is plotted along the X-axis.

Technically this distance is determined by two small pins 8 and 9 (Fig. 3—4) on the probe head. By virtue of this arrangement the head can also be used on curved surfaces. Also, the distance is not dependent on the angle at which the head is to the surface. If desired a probe head with a spacer ring can be used for flat samples.

Light detection is accomplished through photodiodes in an integrated circuit, shown at 15 for the reference beam and at 16 for the reflected light from the sample, with an operational amplifier shown at 17 and 18, respectively.

The central fibre 5 of the array of fibres directed to the source of light 4 shines on a $BaSO_4$ pill 10 (Fig. 1) at an angle of 45°. In a similar geometry to the probe head, a reference observation fibre 11 receives the light reflected along the normal (0°), which is passed to the separate photodiode 15. The use of other non-white standards is of course possible. There is thus formed a twin-bundle spectrophotometer.

The gas discharge or flash light is driven pulse-wise, as is known per se. The pulses, from the photodiodes, are separated from other signals, as a result of which the instrument does not perceive ambient light. A divider circuit 19 subsequently divides the probe head signal y by the reference signal x. The amplification of the reference signal in amplifier 17 and the amplification of the probe head signal in amplifier 18 can be adjusted externally. By placing probe head on a standard preparation, full-scale deflection can be adjusted on meter 20.

Using the meter as shown diagrammatically in Fig. 1, measurements have been made to determine the effect of the linear scattering coefficient on the signal, using different kinds of paper in layers of different thickness, and with different background. The decadic scattering coefficient of the three papers was measured separately by a method already used previously, employing a spectrophotometer with an integrating ball (Calcif. Tiss. Ris. *17* (1975) 129—137). In this connection it was assumed that paper consists of scattering particles in air. Fig. 7 shows the results of the measurement. The reflection in % of the reflection of a $BaSO_4$-pill is plotted along the vertical axis, and the thickness of the measured paper layer along the horizontal axis. The open symbols △, ◯, □ relate to measurements on paper without using a background, and the closed symbols ▲, ●, ■ on the use of a background in the form of an aluminium mirror. Furthermore, the symbol △ corresponds with typewriting paper having a linear scattering coefficient $s_o=66.4$ mm$^{-1}$; the symbol □ with balance pan paper whose $s_o=21.1$ mm$^{-1}$ and the symbol ◯ with drawing paper whose $s_o=9.18$ mm$^{-1}$. Figure 7 shows that the reflection becomes independent of the background at layer thicknesses of approximately 0.2 mm. This distance is almost independent of the scattering coefficient of the material. In this instance the meter works as a scattering monitor; the signal is determined by the scattering coefficient.

By using more optic illumination fibres in the probe head, the area of illumination can be increased so that the meter reading becomes independent of the depth of light penetration, as a result of which a 45°/0° geometry reflectometer is formed.

If desired, very long fibres (e.g. 25 m) can be used between the apparatus and the probe head without any objection.

When the set angle between the measuring fibre and the illumination fibre is adapted to the index of refraction of the medium between the probe head and the sample, it is possible to make measurements in liquid. For water (n=1.33), for example, the angle should be 40.3°, and in air 29°.

It is possible for the reflection spectrum obtained with the meter according to the invention to be stored by means of a built-in microprocessor, and to convert it to colour points under standard illumination. As the meter, which functions as a monitor, produces a reflection spectrum, it is not necessary to use a standard light source. The data of the standard light source just occur in the calculation, and must therefore be available in the memory of the processor.

It will be clear, for that matter, that the apparatus described above and shown in the accompanying drawings can be modified without departing from the scope of the present invention.

## Claims

1. An optical reflection meter suitable for reflection measurement on a translucent material, comprising a source of light (4), a light detection means (15, 16), and a probe head (7), comprising at least one optical illumination fibre (1, 2), connecting the light source and the probe head for illumination of the surface (25) to be measured, and an optical fibre guide connecting the probe head (7) and the light detection means (15, 16) for receiving the reflected light and conducting the same to the light detection means, characterized in that said optical fibre guide comprises a single optical measuring fibre (3) and in that the probe head is arranged, in use, to effect illumination of the surface (25) of the sample to be measured and reception of the reflected light, with angles of incidence and reflection of 45° and 0°, respectively, and in that the probe head is arranged, in use, to effect that once specularly reflected light cannot enter the measuring fibre (3), that the surface area to be measured is of the order of the depth of light penetration into the material to be measured, or less, and that the surface area illuminated by the optical illumination fibre (1; 2) is of at least substantially the same size as the surface area to be measured.

2. Apparatus as claimed in claim 1, characterized in that the probe head (7) comprises a second optic illumination fibre (1; 2), one end of which is positioned in said probe head (7) on an imaginary straight line connecting the ends of said first optical illumination fibre and said measuring fibre (3), and equidistantly spaced from the end of the measuring fibre.

3. Apparatus as claimed in either of claims 1 and 2, characterized in that the probe head (7) comprises a spacer member (8; 9) for keeping the ends of the optical fibres located in said head in spaced relationship to the surface (25) being measured and in that, during measurements, said spacer member can keep the optical fibre ends spaced such a distance from the surface being measured that light specularly reflected once at said surface cannot be accepted by the measuring fibre (3).

4. Apparatus as claimed in claim 3, characterized in that said spacer member (8; 9) comprises two outwardly directed pins located in an imaginary straight line containing the end of the measuring fibre (3) and perpendicular to the line connecting the ends of the optical fibres (1; 2) and said pins being arranged symmetrically relative to the end of the measuring fibre (3).

5. Apparatus as claimed in any of claims 1—4, characterized in that it comprises a pulsating light source (4) which is of elongated shape and extends parallel to the line connecting the ends of the illumination fibres (1; 2) to be illuminated by said light source (4), said ends being fixed in an illumination head (14).

6. Apparatus as claimed in claim 5, characterized in that the distance between the elongated light source and said illumination head (14) has been so selected that the width of the light source just fills up the angle of acceptance of fibres (1; 2).

7. Apparatus as claimed in any of claims 5—6, characterized by the provision of an interference filter wedge (6) between the light source (4) and the array of fibre ends for variable spectral selection without lenses or mirrors.

8. Apparatus as claimed in any of claims 4—7, characterized in that the end of a reference illumination fibre (5), the other end of which is directed to the surface of a reference material (10), is fixed in said illumination head between the ends of the illumination fibres (1; 2), and is in a 45°—0° geometry relationship combined with a reference measuring fibre (11), with which the light reflected by said reference material according to the normal can be received.

9. Apparatus as claimed in any of claims 5—8, characterized in that the array of fibre ends is tiltable through the illumination head (14) in the plane containing the array of fibre ends and the elongated light source (4).

## Patentansprüche

1. Optischer Reflexionsmesser zur Reflexionsmessung an einem lichtdurchlässigen Material, versehen mit einer Lichtquelle (4), Lichtdetektiermitteln (15, 16) und einem Messkopf (7), der mindestens einen optischen Leuchtfaden (1, 2) enthält, der die Lichtquelle und den Messkopf zur Beleuchtung der zu messenden Oberfläche (25) verbindet, und eine optische Fadenführung, die den Messkopf (7) und die Lichtdetektiermittel (15, 16) zur Aufnahme des reflektierten Lichtes verbindet und dieses zu den Lichtdetektiermitteln führt, dadurch gekennzeichnet, dass die genannte optische Fadenführung einen einzigen optischen Messfaden (3) aufweist, und dass der Messkopf, im Betrieb, zur Beleuchtung der Oberfläche (25) der zu messenden Probe und zur Aufnahme des reflektierten Lichtes mit Einfalls- und Reflexionswinkeln von 45° bzw. 0° eingerichtet ist, und dass der Messkopf, im Betrieb, dazu eingerichtet ist, zu bewirken, dass einmal spiegelnd reflektiertes Licht nicht in den Messfaden eindringen kann, dass die zu messende Oberfläche in der Grössenordnung der Tiefe des Lichteindringung in das zu messende Material ist, oder weniger, und dass die vom optischen Leuchtfaden (1; 2) beleuchtete Oberfläche mindestens ungefähr dieselbe Grösse aufweist wie die zu messende Oberfläche.

2. Vorrichtung nach Anspruch 1, dadurch gekennzeichnet, dass der Messkopf (7) einen zweiten optischen Leuchtfaden (1; 2) aufweist, dessen eines Ende sich im Messkopf (7) auf einer imaginären geraden Linie befindet, die die Enden des ersten optischen Leuchtfadens und des Messfadens (3) verbindet, und in gleichem Abstand vom Ende des Messfadens angeordnet ist.

3. Vorrichtung nach Anspruch 1 oder 2, dadurch gekennzeichnet, dass der Messkopf (7) einen Distanzhalter (8, 9) aufweist, mit dem die Enden der im Messkopf befindlichen optischen Fäden in Abstand von der gemessenen Oberfläche (25) gehalten werden, und dass während der Messvorgänge der genannte Distanzhalter die optischen Fadenenden in solchem Abstand von der gemessenen Oberfläche halten kann, dass einmal an der genannten Oberfläche spiegelnd reflektiertes Licht nicht vom Messfaden (3) aufgenommen werden kann.

4. Vorrichtung nach Anspruch 3, dadurch gekennzeichnet, dass der Distanzhalter (8; 9) zwei nach aussen gerichtete Stifte aufweist, die sich auf einer imaginären geraden Linie befinden, die das Ende des Messfadens (3) enthält und lotrecht auf der die Ende der optischen Fäden (1; 2) verbindenden Linie steht, und dass die genannten Stifte symmetrisch zum Ende des Messfadens (3) angeordnet sind.

5. Vorrichtung nach einem der Ansprüche 1—4, dadurch gekennzeichnet, dass sie eine pulsierende Lichtquelle (4) aufweist, die eine längliche Form hat und sich parallel zu der Linie erstreckt, die die Enden der von der Lichtquelle (4) zu erleuchtenden Leuchtfäden (1; 2) verbinden, welche Enden in einem Leuchtkopf (14) befestigt sind.

6. Vorrichtung nach Anspruch 5, dadurch gekennzeichnet, dass der Abstand zwischen der länglichen Lichtquelle und dem Leuchtkopf (14) so gewählt ist, dass die Breite der Lichtquelle gerade den Auffangwinkel der Fäden (1; 2) ausfüllt.

7. Vorrichtung nach einem der Ansprüche 5—6, dadurch gekennzeichnet, dass ein Interferenzfilterkeil (6) zwischen der Lichtquelle (4) und der Reihe Fadenenden zur variablen Spektralselektion ohne Linsen oder Spiegel vorgesehen ist.

8. Vorrichtung nach einem der Ansprüche 4—7, dadurch gekennzeichnet, dass das Ende eines Referenzleuchtfadens (5), dessen anderes Ende auf die Oberfläche eines Referenzmaterials (10) gerichtet ist, im Leuchtkopf zwischen den Enden der Leuchtfäden (1; 2) befestigt ist, und in einer 45°—0° Geometriebeziehung mit einem Referenz-

messfaden (11) kombiniert ist, mit dem das vom genannten Referenzmaterial nach der Normalen reflektierte Licht aufgenommen werden kann.

9. Vorrichtung nach einem der Ansprüche 5—8, dadurch gekennzeichnet, dass die Reihe Fadenenden durch den Leichtkopf (14) in der die Reihe Fadenenden und die längliche Lichtquelle (4) enthaltenden Ebene kippbar ist.

**Revendications**

1. Un réflectomètre optique pour mesurer des réflections sur un matériau translucide, comprenant une source lumineuse 4, des moyens de détection de lumière 15, 16, une tête de sonde (de mesure) 7, et comprenant au moins une fibre d'illumination optique 1, 2 raccordant la source lumineuse et la tête de sonde (de mesure) pour l'illumination de la surface 25 à mesurer, et un guide de fibre optique raccordant la têté de sonde (de mesure) 7 et les moyens de détection de lumière 15, 16 pour recevoir la lumière réfléchie et conduite cette lumière aux moyens de détection de lumière, caractérisé en ce que ledit guide de fibre optique comprend une seule fibre de mesure optique 3 et en ce que la tête de sonde (de mesure) est arrangée, en état d'emploi, à effectuer l'illumination de la surface 25 de l'échantillon à mesurer et la réception de la lumière réfléchie, à angles d'incidence et de réflection de 45° et de 0°, respectivement, et en ce que la tête de sonde (de mesure) est arrangée, en état d'emploi, à effectuer que la lumière, une fois réfléchie spéculairement, ne peut pas pénétrer dans la fibre de mesure 3, que la surface à mesurer est de l'ordre de la profondeur de pénétration de lumière dans le matériau à mesurer, ou moins, et que la surface illuminée par la fibre d'illumination optique 1, 2 est au moins substantiellement de la même dimension que la surface à mesurer.

2. Un appareil selon la revendication 1, caractérisé en ce que la tête de sonde (de mesure) 7 comprend une deuxième fibre d'illumination optique 1, 2 dont une extrémité est située dans ladite tête de sonde (de mesure) 7 sur une ligne droite imaginaire raccordant les extrémités de ladite première fibre d'illumination optique et ladite fibre de mesure 3, et à espace équidistant de l'extrémité de la fibre de mesure.

3. Un appareil selon l'une quelconque des revendications 1 et 2, caractérisé en ce que la tête de sonde (de mesure) 7 comprend un organe d'espacement 8, 9 pour maintenir les extrémités des fibres optiques situées dans ladite tête en relation espacée avec la surface 25 étant mesurée et en ce que, pendant les mesures, ledit organe d'espacement maintient les extrémités de la fibre optique espacées à telle distance de la surface étant mesurée que la lumière, une fois réfléchie spéculairement sur cette surface, ne peut pas être reçue par la fibre de mesure 3.

4. Un appareil selon la revendication 3, caractérisé en ce que ledit organe d'espacement 8, 9 comprend deux chevilles orientées vers l'extérieur situées dans une ligne droite imaginaire contenant l'extrémité de la fibre de mesure 3 et perpendiculaire à la ligne raccordant les extrémités des fibres optiques 1, 2, et lesdites chevilles étant arrangées symétriquement par rapport à l'extrémité de la fibre de mesure 3.

5. Un appareil selon l'une quelconque des revendications 1—4, caractérisé en ce qu'il comprend une source lumineuse pulsatoire 4 ayant une forme allongée et s'étendant parallèle à la ligne raccordant les extrémités des fibres d'illumination 1, 2 à illuminer par ladite source lumineuse 4, lesdites extrémités étant fixées dans une tête d'illumination 14.

6. Un appareil selon la revendication 5, caractérisée en ce que la distance entre la source lumineuse allongée et ladite tête d'illumination 14 est choisie de telle sorte que la largeur de la source lumineuse justement comble l'angle de réception des fibres 1, 2.

7. Un appareil selon l'une quelconque des revendications 5—6, caractérisé par la fourniture d'un coin filtrant d'interférence 6 entre la source lumineuse 4 et la rangée d'extrémités de fibres pour sélection spectrale variable sans objectifs ou miroirs.

8. Un appareil selon l'une quelconque des revendications 4—7, caractérisé en ce que l'extrémité d'une fibre d'illumination de référence 5 dont l'autre extrémité est orientée vers la surface d'un matériau de référence 10 est fixée dans ladite tête d'illumination entre les extrémités des fibres d'illumination 1, 2, et étant en rapport géométrique de 45°—0° avec une fibre de mesure de référence 11 avec laquelle la lumière réfléchie par ledit matériau de référence selon la normale peut être reçue.

9. Un appareil selon l'une quelconque des revendications 5—8, caractérisé en ce que la rangée d'extrémités de fibre est basculante à travers la tête d'illumination 14 dans la plan contenant la rangée d'extrémités de fibre et la source lumineuse allongée 4.

FIG.1

0 032 774

FIG. 2

FIG.3

FIG.4

FIG.5

FIG.6

FIG.7